Europäisches Patentamt

(19) European Patent Office

Office européen des brevets

(11) Publication number: **0 200 387**
**B1**

## (12) EUROPEAN PATENT SPECIFICATION

(45) Date of publication of patent specification: **08.11.89**

(21) Application number: **86302584.7**

(22) Date of filing: **08.04.86**

(51) Int. Cl.⁴: **B 60 T 13/14**

(54) **Power booster.**

(30) Priority: **29.04.85 US 728279**

(43) Date of publication of application:
**05.11.86 Bulletin 86/45**

(45) Publication of the grant of the patent:
**08.11.89 Bulletin 89/45**

(84) Designated Contracting States:
**DE FR GB**

(56) References cited:
**GB-A-2 073 346**
**US-A-3 898 808**

(73) Proprietor: **GENERAL MOTORS CORPORATION**
**General Motors Building 3044 West Grand**
**Boulevard**
**Detroit Michigan 48202 (US)**

(72) Inventor: **Flory, Donald Marion**
**3620 Arcanum-Bearsmill Road**
**Arcanum Ohio 45304 (US)**

(74) Representative: **Denton, Michael John et al**
**Patent Section - Luton Office (F6) Vauxhall**
**Motors Limited P.O. Box 3 Kimpton Road**
**Luton Bedfordshire LU2 0SY (GB)**

Courier Press, Leamington Spa, England.

## Description

This invention relates to a hydraulic power booster.

More specifically, the invention is concerned with a power booster of the hydraulic type in which pressurized hydraulic fluid is supplied to the booster, and, under the control of a valve mechanism, the fluid pressure is selectively placed in communication with a power chamber to act on a booster power piston to actuate the booster. The valve mechanism is of closed-centre construction, and it is preferably used in a power booster for a brake system, with the booster actuating at least one hydraulic brake circuit through the intermediary of a master cylinder arrangement. A booster according to the preamble of claim 1 is known, e.g. from US—A—3,898,808.

The invention is concerned with a booster construction which has an improved fluid pressure supply arrangement, and thereby permits a reduction in the overall length of the booster.

To this end, a hydraulic power booster in accordance with the present invention is characterised by the combination of features specified in claim 1.

Thus in a hydraulic power booster in accordance with the present invention, there is a tubular fluid pressure conduit for the introduction of hydraulic fluid supply pressure to the booster at a point adjacent the control valve mechanism so that the supply pressure may be used to generate booster actuating pressure under control of the valve mechanism when the booster is actuated, and the tubular conduit also forms the booster piston return spring.

In a preferred embodiment of a hydraulic power booster in accordance with the present invention, fluid at booster supply pressure, from a pump or an accumulator or both, is delivered to a conduit retainer and piston guide within the booster housing bore. One end of the tubular conduit forming the booster piston return spring is secured to the retainer and guide so as to receive the fluid pressurized at supply pressure. The other end of the tubular conduit forming the spring is similarly secured to the power piston so that the tubular conduit delivers the supply pressure to an annular chamber within the power piston and around a portion of the control valve body. The pressure is retained in this annular chamber by seals on the valve body co-operating with a bore wall in the power piston. Actuating pressure is applied to the power piston only when it is desired to actuate the booster. This is accomplished by initial movement of the valve body causing one of the valve body seals to open the pressure-charged annular chamber within the power piston to the power chamber to transmit pressure thereto. The valve body also operates in valving relation with a portion of the bore of the power piston to control the exhaust of hydraulic pressure from the power chamber, and therefore controls the actuating pressure in the power chamber which acts on the power piston.

This arrangement permits the pressure seal for the power piston to be at exhaust pressure at all times other than when the booster is being actuated by hydraulic pressure. The power piston seal is therefore not continuously subjected to supply pressure, which could cause pressure leakage when the booster is at the released position and cause the pump to have to continually make up pressure to take care of the loss in pressure due to such leakage.

By using the return spring as the tubular conduit for the supply pressure, it is possible for the overall length of the booster to be reduced as compared with the prior requirement for separate passages and valving within the piston and the booster housing to communicate the supply pressure from the pressure source with the annular chamber within the power piston.

The booster valve arrangement is further described and claimed in EP—A—0,200,386 (Serial No. 86 302 583), based on USSN 728,262 (US—A—4,754,604).

A typical example of an air-suspended power booster is disclosed in US—A—3,009,449. In the said prior construction, operating vacuum from a vehicle manifold is communicated by way of a hose disposed in a chamber of the booster to an inlet in the power piston of the booster, in the vicinity of a control valve assembly controlling the movement of the power piston. A separate return spring is provided for the power piston.

In the drawings:

Figure 1 is a longitudinal sectional view, with parts broken away and in elevation, and with other parts illustrated schematically, illustrating a brake system incorporating a preferred embodiment of a hydraulic booster in accordance with the present invention;

Figure 2 is an enlarged fragmentary cross-sectional view of the booster of Figure 1, with parts shown broken away, on the line 2—2 of that Figure, in the direction of the arrows; and

Figure 3 is an enlarged longitudinal sectional view of the booster of Figure 1, with parts shown broken away, on the line 3—3 of Figure 2, in the direction of the arrows.

As is shown in the drawings, a booster and master cylinder assembly 10 has a fluid reservoir 12 with a reservoir chamber 14 therein normally containing hydraulic fluid to serve the booster and the entire brake system. The booster embodying the invention is shown as a part of a brake system for automotive vehicles, but the booster could be used for other purposes.

The assembly 10 has a housing 16 containing a master cylinder section 18 and a power booster section 20. The housing 16 has bosses 22 and 24 formed thereon for mounting the reservoir 12 and providing fluid connections between the reservoir chamber 14 and the appropriate portions of the master cylinder section 18 and the power booster section 20. In the construction illustrated, the boss 22 has a recess 26 receiving a spigot 28 formed as a part of the reservoir 12, with a seal 30 positioned to seal the spigot relative to the recess wall. The bottom of the recess 26 is provided with compensation ports 32 and 34 for the master cylinder section 18, as will be further described. The boss 24 is illustrated as having a flat top surface 36 and a port 38 formed therethrough and extending into the housing of the power booster section 20 to connect with the reservoir chamber 14 as will be further described. A seal 40 seals the reservoir 12 relative to the boss top surface 36. The reservoir port 42 formed in the bottom of the reservoir 12 is in alignment with the port 38 and is in continuous fluid communication therewith.

The housing 16 has a bore 44 extending therein from the rear end 46 to the front end thereof, the bore terminating at the front end in an end wall 48. The bore side wall 50 is formed to have various diameters, shoulders and recesses, as will be further described.

A conduit retainer and piston guide member 52 is received within the bore 44 so that it is axially located against a tapered shoulder 54 of the bore side wall 50. The member 52 is annular, with circumferentially external seal grooves 56 and 58 formed therein in axially spaced relation and respectively receiving O-ring seals 60 and 62. The seals 60 and 62 seal against the adjacent portions of the bore wall 50. An internal groove-like recess 64 is formed in the bore wall 50, with the member 52 being so axially located that the seals 60 and 62 are on axially opposite sides of and beyond the groove-like recess 64. Therefore the recess 64 of the bore wall 50 and the member 52 co-operate to define an annular chamber 66 which is sealed against pressure leakage along the bore wall. The inner annular surface 68 of the member 52 is provided with an inner seal groove 70 containing an O-ring seal 72 therein. The inner annular surface 68 and the O-ring seal 72 co-operate with a portion of the power piston, to be described, to guide the forward end of the power piston and also to seal it. The groove 70 and the seal 72 are located generally radially inwardly of the seal groove 56 and the seal 60. A suitable passage formed within the member 52 connects the annular chamber 66 to a passage forming a connection to a tubular conduit, to be described.

Another annular piston guide 76 is received in the rear portion of the bore 44. It is provided with a land 78 having an outer circumferential seal groove 80 formed therein containing an O-ring seal 82. The seal 82 seals against the adjacent portion of the bore wall 50. A snap ring 84 mounted in a ring groove 86 formed in the portion of the bore wall 50 adjacent the housing end 46 acts as a stop and retainer for the piston guide 76. The inner annular surface 88 of the piston guide 76 has a seal groove 90 formed therein. The seal 92 and a back-up washer 94 are contained within the groove 90, with the seal 92 sealing against another portion of the power piston to be described. The inner annular surface 88 has an undercut portion 96 extending axially and opening into the bore 44 for purposes to be described.

The piston guide 76 is also axially located by a tapered shoulder 98 formed as a part of the bore wall 50 and also forming a portion of a booster power chamber 100 into which the piston guide undercut portion 96 opens.

The power piston 102 has a land forming a head 104 with a reduced-diameter rearward extension section 106 and a reduced-diameter forward extension section 108 extending from opposite axial sides of the piston head 104. The piston head 104 has a seal groove 110 formed in the outer periphery thereof and containing an O-ring seal 112. This seal is in reciprocable sealing relation with the centre portion of the bore wall 50 just forward of the tapered shoulder 98. The forward extension section 108 of the power piston 102 extends through the member 52 in close but slightly radially spaced relation to the inner annular surface 68 of the member 52. The seal 72 is thereby in reciprocable sealing relation with the outer surface of the power piston forward extension section 108. An annular chamber 114 is defined by the piston head 104, the piston forward extension section 108, one side of the member 52, and the bore wall section 116 of the bore 50 in which the member 52 and the power piston land 104 are received. An annular recess provided by an undercut section 118 of the bore wall section 116 slightly enlarges a portion of the outer diameter of the annular chamber 114 axially beyond the point at which the power piston land 104 may move at maximum booster actuation so that the port 38, opening into the bore 44 through the undercut section 118, is always hydraulically fluid-connected to the reservoir chamber 14. Therefore the annular chamber 114 is always at exhaust (reservoir) pressure.

A tubular conduit 120, formed from a hollow tube and made of a spring material, is received in the chamber 114 about the piston extension section 108, the tubular conduit being in a coil-spring form. One coil end of the spring-form tubular conduit 120 engages the member 52 in spring-reaction relation, and the other end similarly engages the side 122 of the power piston head 104 in spring-reacting relation. These sides engaged by the tubular conduit and the spring 120 have circular ramps which provide reaction engagement of a major portion of the end coil as the spring is compressed.

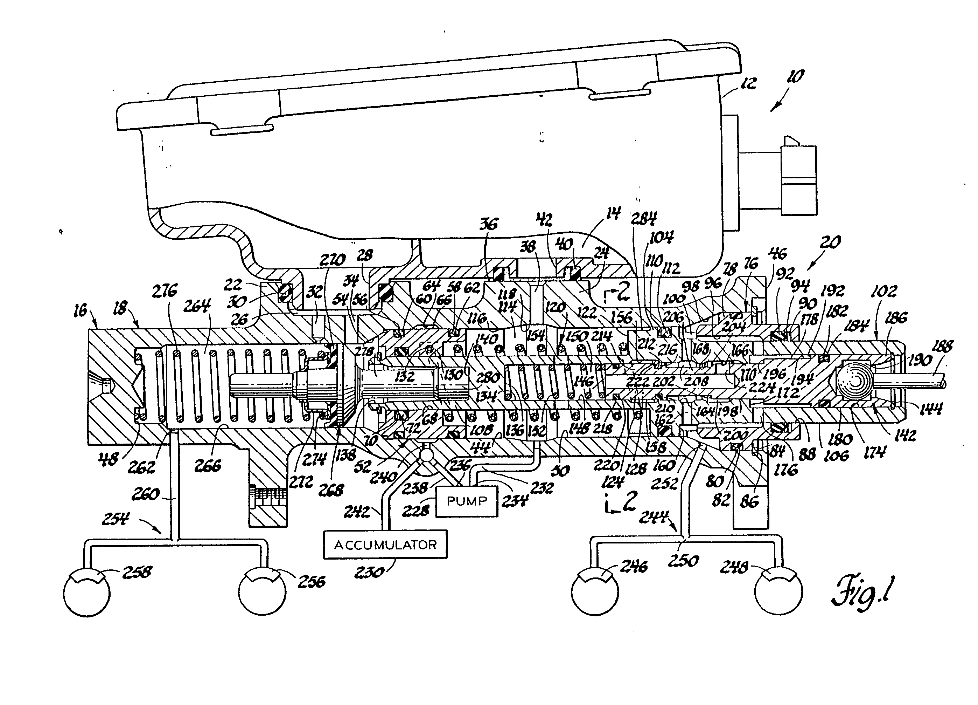

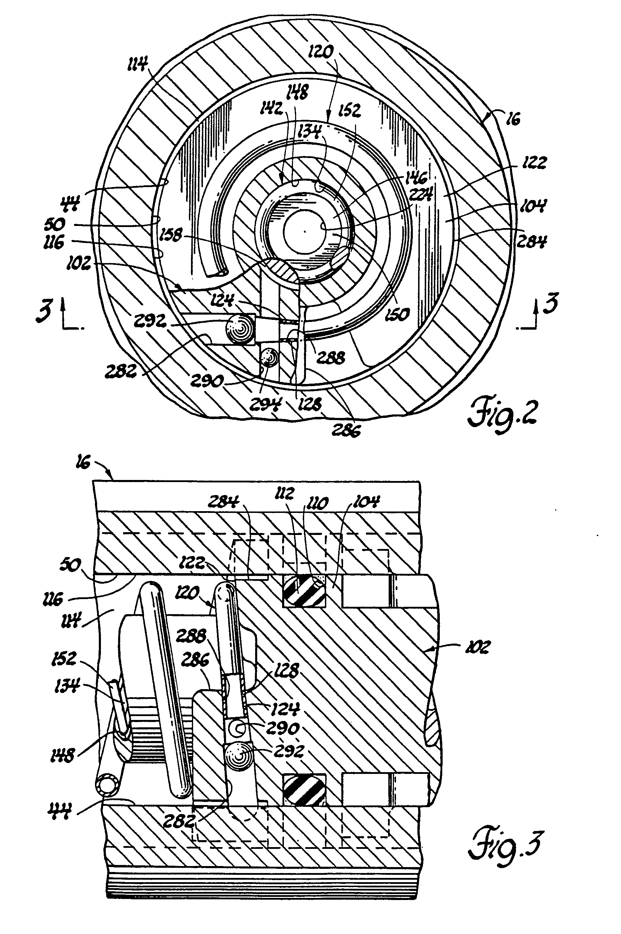

As is more particularly illustrated in Figures 2 and 3, and described in greater detail below, the tubular conduit end 124 is secured to a passage 282 formed in a part of the power piston head 104 to provide a fluid connection 128. The other end 130 of the tubular conduit 120 is similarly connected by means of a connection 132 to a passage formed in the member 52. The passage in the member 52 to which the tubular conduit end 130 is connected is formed in the member 52 so that it opens into the annular chamber 66 and is therefore in constant fluid communication with that chamber.

The power piston 102 has a bore 134 formed therein so as to be open at the rear end of the piston extension 106 and to extend through that extension, the power piston land 104 and through an axial portion of the forward piston extension 108. The bore 134 terminates axially within the piston extension section 108 so that the forward end of the bore 134 is closed by a bulkhead providing an end wall 136. Another, recess-like bore 138 is formed axially into the piston extension section 108 from the forward end thereof, terminating at the bulkhead end wall 140. A valve body 142, to be further described, is reciprocably received within the power piston bore 134. The valve body 142 is held therein by a retainer and stop such as a snap ring 144 located in the rear end of the bore 134. The forward end 146 of the valve body 142 co-operates with the bore wall 148 of the bore 134, and particularly the portion thereof adjacent the end wall 136, to define a chamber 150. A piston return spring 152 is located in the chamber 150 and engages the end wall 136 of the power piston extension 108 and the end 146 of the valve body 142 so as to continually urge the valve body 142 towards its stop 144. A cross-passage 154 in the piston extension section 108 intersects the chamber 150 so that the chamber 150 is always in fluid communication with the annular chamber 114 and, through the ports 38 and 42, with the reservoir chamber 14. The portion of the bore wall 148 radially inwardly of the power piston head 104 has an enlarged-diameter inwardly opening groove 156 formed therein. The groove 156 co-operates with the valve body 142 to define an annular chamber 158. The passage into which the tubular conduit end 124 opens within the land 104 connects with the chamber 158 so that hydraulic fluid supply pressure within the tubular conduit 120 is directly communicated to the annular chamber 158 at all times.

The side 160 of the power piston 102 defining a portion of the power chamber 100 is axially adjacent a cross-passage 162 formed in a reduced-diameter portion of the power piston 102. The outer end of the passage 162 opens into and is an effective part of the power chamber 100. The inner end of the passage 162 opens into an annular inwardly-opening groove 164 formed in a portion of the wall of the bore 134. Another groove 166 formed in a portion of the wall of the bore 134 is axially spaced slightly rearwardly of the groove 164. The groove 166 has a forward edge 168 and a rearward edge 170. The forward edge 168 is one part of the control valve which controls the pressure in the power chamber 100 during booster actuation. The other part is formed on the valve body 142, as will be described.

Axially spaced slightly rearwardly of the groove 166 is a shoulder 172, formed as a part of the bore wall of the bore 134 and also forming the forward end of a slightly enlarged bore section 174 of the bore 134. A cross-passage 176 formed through the rearward extension section 106 of the power piston 102 opens the forward end of the bore section 174 to the undercut 96 formed in the piston guide 76 so that pressure in the power chamber 100 is transmitted through the undercut 96 and the cross-passage 176 to a reaction chamber 178 defined by the forward part of the bore section 174, the shoulder 172 and a part of the valve body 142.

The valve body 142 has a rearwardly located land 180 located in the rearward portion of the bore section 174. The land 180 has an outer peripheral seal groove 182 formed therein, with an O-ring seal 184 located in the groove 182 so as to be in sealing relation with the portion of the bore wall defining the bore section 174. In the released position of the valve body, the rear end 186 of the valve body 142 is engageable with the stop 144. A push rod 188 extends into and is pivotally secured within a recess 190 formed in the rear end of the valve body 142 so that the push rod may be axially actuated to move the valve body 142 forwardly relative to the piston 102 and the housing 16 to actuate the booster.

A shoulder 192 defining the forward end of the land 180 leads to a slightly reduced-diameter portion 194 of the valve body 142, which terminates at another shoulder 196 on the valve body. The outer periphery of the reduced-diameter portion 194 generally defines the inner periphery of the reaction chamber 178.

Forwardly beyond the shoulder 196, the valve body 142 has a further reduced-diameter portion 198 which extends into the annular chamber 200 formed by the groove 166 and the valve body 142. The forward end of the reduced-diameter portion 198 terminates at a shoulder 202, the corner edge 204 of which co-operates with the groove edge 168 to provide the control valve for controlling the pressure in the power chamber 100 when the booster is actuated.

The valve body 142 has a still further reduced-diameter portion 206 extending forwardly of the shoulder 202 and positioned radially inwardly of the bore groove 164. The valve body reduced-diameter portion 206 co-operates with the groove 164 and the adjacent portions of the bore wall of the bore 134 to define an annular chamber 208 which is continuously connected to the power chamber 100 by the cross-passage 162 and therefore effectively forms a part of the power chamber 100. The valve land 210 formed on the valve body 142 forwardly of the reduced-diameter portion 206 has a seal groove 212 at its forward side, with the forward wall of the seal groove being of a slightly lesser diameter than the rearward wall formed by the land 210. The forward wall of the seal groove is defined by a slightly reduced-diameter portion 214 of the valve body 142, that portion extending from the groove 156 into the bore wall 148 forming a part of the chamber 150. A truncated rectangular cross-section seal 216 is received in the seal groove 212 with the truncated corner thereof facing radially outwardly and forwardly. The forward end of the valve body reduced-diameter portion 214 has a seal groove 218 formed in the outer periphery thereof and containing an O-ring seal 220 which seals against the bore wall 148.

In the released position illustrated in Figure 1, the seal 216 seals against the portion of the bore wall 148 just rearwardly of a groove edge 222 of the groove 156. The seals 216 and 220 therefore seal the annular chamber 158 during booster release so that hydraulic supply pressure provided to that chamber is not permitted to pass beyond the chamber.

The valve body 142 has a radially and axially extending passage 224 opening through the reduced-diameter portion which opens into the groove 166 and the annular chamber 200 defined by the groove 166 and the valve body 142, so as to continuously connect the chamber 200 by way of the valve body passage 224, the chamber 150, the cross-passage 154, the chamber 114, and the ports 38 and 42 to the reservoir chamber 14. The annular chamber 200 is therefore always at reservoir pressure, and is downstream of any hydraulic pressure flow passing through the booster, that flow and pressure being controlled by the valve formed by the groove edge 168 and the valve body corner edge 204.

A source of supply pressure is illustrated schematically as including a pump 228 and a pressure accumulator 230 which is pressure-charged by the pump 228. The pump 228 receives fluid from the reservoir chamber 14 through a conduit 232 connecting with the chamber 114 through the undercut 118. The conduit 232 is connected to the pump inlet 234. The pump outlet 236 is connected by a conduit 238 to a passage 240 formed in the housing 16 and opening into the annular chamber 66. The conduit 238 and the passage 240 are also connected by a conduit 242 to the accumulator 230 so that the accumulator is charged by hydraulic pressure generated by the pump 228 and is able to supply that pressure by way of the passage 240 to the annular chamber 66 and thence through the tubular conduit 120 to the annular chamber 158.

The booster is illustrated as part of a hydraulic brake system for a vehicle. The system has a first brake circuit 244 containing first and second wheel brakes 246 and 248 connected by a conduit arrangement 250 to an outlet 252 formed in the housing 16 and opening into the power chamber 100, appropriately through the tapered shoulder 98. Thus power chamber actuating pressure is directly applied to the wheel brakes 246 and 248. By way of example, these wheel brakes may be the front axle brakes of a vehicle.

The other brake circuit 254 is illustrated as including a pair of wheel brakes 256 and 258 connected by a conduit arrangement 260 to an outlet 262 formed in the housing 16 and opening into the forward portion of the pressurizing chamber 264 of the master cylinder section 18. By way of example, the wheel brakes 256 and 258 may be the rear axle wheel brakes of a vehicle.

The pressurizing chamber 264 is located in the forward bore section 266 of the housing bore 44. A master cylinder pressurizing piston 268 is reciprocably mounted in the bore section 266 and co-operates with the bore section, including the end wall 48, to define the pressurizing chamber 264. The pressurizing piston 268 has a piston cup 270 on the forward side thereof which, in the released position illustrated, just clears the compensation port 32. A cup expander and spring retainer 272 is fitted on the forward side of the piston 268, and provides reaction for the end 274 of the master cylinder piston return spring 276. The other end of the spring 276 reacts against the end wall 48 so that the master cylinder piston is continually urged to the released position shown. A rearward piston extension 278 extends into the recess 138 of the power piston extension section 108 so that the end 280 of the piston extension 278 is in abutting engagement with the end wall 140 at the bottom of the recess 138. Thus the power piston extension section 108 acts as an output member for the booster to operate the master cylinder piston 268.

As is well known in the art, actuating movement of the piston 268 will close off the compensation port 32 and then pressurize brake actuating fluid in the pressurizing chamber 264 to actuate the wheel brakes 256 and 258.

In some arrangements the master cylinder section 18 may be a dual master cylinder in which separate pressurizing pistons and chambers are provided for separate circuits of a brake system.

In the particular arrangement shown, the effective area of the side 160 of the power piston head 104 is equal to the area of the pressurizing side of the master cylinder piston 268, so that the booster pressure generated in the power chamber 100 is at substantially the same pressure as the pressure generated in the pressurizing chamber 264. Therefore the brake-actuating pressures in the circuits 244 and 254 are substantially the same.

Different areas could be provided if it were considered desirable for the brake circuits 244 and 254 to have different brake-actuating pressures.

Figures 2 and 3 show the connection of the tubular conduit and piston return spring 120 to the power piston 102 in greater detail. A similar connection is provided between the end 130 of the tubular conduit (piston return spring) 120 and the conduit retainer and piston guide member 52.

The side 122 of the land 104 is formed as a circular ramp surface, as is better seen in Figure 3, so that the major portion of the end coil of the tubular conduit (piston return spring) 120 is in surface contact with a large portion of this ramp surface. The circular ramp surface is so arranged that the end 124 of the tubular conduit (piston return spring) 120 will fit into a passage 282 formed through a portion of the land 104 so as to open from the slightly reduced-diameter outer portion 284 of that land through the end 286 of the ramped side 122 and to receive in axial alignment therewith the end 124 of the tubular conduit 120. Therefore the ramp surface fully supports the end coil, and minimizes any levering action at the connection of the tubular conduit end 124 with the passage 282.

The passage 282 is tapered as shown at 288 so that, after the end 124 of the tubular conduit 120 has been inserted therein, a tool may be inserted through the outer end of the passage 282 into the tubular conduit, for flaring the tubular conduit end 124 outwardly so that it is tightly secured to the power piston and will remain so secure as to prevent any hydraulic fluid leakage up to a pressure value well above that which may be found in the brake booster. If desired, a suitable cement may also be used to further assure the securing and sealing arrangement.

Another passage 290 is formed in the power piston land 104 so as to connect the passage 282 with the annular chamber 158 on the interior of the power piston land 104, as described above. In some instances, the passage 290 may be drilled, using the outer end of passage 282 as an access, or as shown in Figures 2 and 3 it may be a cross-passage also extending inwardly from the land reduced-diameter portion 284 so as to intersect the passage 282 and then intersect the annular chamber 158.

After the end 124 of the tubular conduit 120 has been secured in place, the passage 282 is suitably sealed so as to prevent any fluid communication between the interior of that passage connecting with the annular chamber 158 and the reservoir pressure chamber 150. The particular arrangement illustrated utilises a ball 292 which is press-fitted into the interior of the passage 282 so as to seal the outer portion of that passage. Another ball 294 is similarly used to seal the outer portion of the passage 290 if that passage is a separately formed passage. In addition, an appropriate sealant material may if desired be used to fill the portions of the passages 282 and 290 outwardly of the balls 292 and 294.

The brake booster operates as follows. The assembly 10 is illustrated in Figure 1 in the released position before the brake booster is operated. The reservoir 12 has hydraulic fluid in it, and hydraulic fluid fills the various chambers, ports, passages and conduits of the system. The pump 228 has been operational so that it has a full supply pressure charged into the accumulator 230. Full hydraulic supply pressure exists in the annular chamber 66 and therefore in the tubular conduit 120 and the annular chamber 158. The remainder of the system is at exhaust (reservoir) pressure. The pump 228 operates to maintain supply pressure to the annular chamber 66 at all times should the accumulator 230 be discharged below a predetermined minimum level of supply pressure needed. Therefore the pump 228 may or may not be operating at the same time that the booster is being actuated. The pump may, for example, be driven by an electric motor which operates in response to a pressure sensor so as to maintain the desired supply pressure level.

When the booster operator desires to actuate the booster, he moves the push rod 188 forwardly, that is, axially to the left as viewed in Figure 1, to move the valve body 142 relative to the power piston 102. This movement is typically accomplished by means of a brake pedal operatively attached to the push rod 188, and the movement takes place against the return force of the valve return spring 152 contained in the chamber 150. The forward movement of the valve body 142 moves the seal 216 and the land 210 forwardly past the groove edge 222 so that the supply pressure in the annular chamber 158 flows past the land 210 and into the power chamber 100. The supply pressure also tends to flow past the valve formed by the groove edge 168 and the corner edge 204, thereby passing through the annular chamber 200 and back to the reservoir chamber 14 through the passage 224, the chamber 150, the passage 154, the chamber 114, and the ports 38 and 42. However, as the corner edge 204 of the control valve approaches the groove edge 168, the pressure flow therethrough is restricted, so causing the pressure in the power chamber 100 to increase, and thus applying pressure to the power piston to move the power piston leftwardly as viewed in Figure 1.

The actuating pressure so applied in the power chamber 100 will continue to increase with continued forward movement of the valve body 142 relative to the power piston, and consequent greater restriction by the control valve, and will move the power piston 102 further leftwardly, tending to move the groove edge 168 away from the valve corner edge 204 until a balance is reached in which the force generated by the actuating pressure in the power chamber 100 is balanced by the resistance to movement of the power piston 102 by the master cylinder section 18. Further leftward movement of the valve body 142 will again further restrict the valve consisting of the groove edge 168 and the corner edge 204, so causing the pressure in the power chamber 100 to further increase until a new balanced (poised) position is reached.

The actuating pressure in the power chamber 100 also passes through the undercut 96 to the chamber 178, where it acts on the slightly increased-diameter portion of the valve body 142 to provide a hydraulic reaction force urging the valve body 142 rightwardly as viewed in Figure 1 so that this force is felt by the booster operator through the push rod 188.

As the power piston 102 moves in the actuating direction, it compresses the coiled tubular conduit 120, which is also the power piston return spring. It also moves the piston forward extension section 108 leftwardly, moving the pressurizing piston 268 leftwardly to initially close the compensation port 32 and then pressurize hydraulic fluid in the pressure chamber 264. The fluid so pressurized in the chamber 264 passes through the outlet 262 and the conduit arrangement 260 to actuate the wheel brakes 256 and 258 in the circuit 254.

In the particular arrangement illustrated in the drawings, the effective area of the power piston on which the actuating pressure in the chamber 100 acts is equal to the effective area of the pressurizing piston 268 in the master cylinder section. Therefore the actuating pressure in the power chamber 100 is substantially equal to the pressure generated in the pressure chamber 264.

Therefore, it being desirable in this instance to have the same brake-actuating pressures in the two brake circuits 244 and 254, a second master cylinder section is not required to pressurize the brake circuit 244. Instead, the actuating pressure in the power chamber 100 passes through the outlet 252 and the conduit 250 to actuate the wheel brakes 246 and 248. At all times during actuation of the booster, excess supply pressure over that required to actuate the booster in the power chamber 100 passes through the valve formed by the groove edge 168 and the corner edge 204 and is exhausted to the reservoir 12 as above described.

When the booster operator reduces or releases the actuating force on the push rod 188, the valve body 142 moves rightwardly as viewed in Figure 1 in response to the bias of the spring 152 and the hydraulic reaction force, so opening the valve formed by the groove edge 168 and the valve corner edge 204, whereby the actuating pressure in the power chamber 100 is reduced by exhausting more of the pressure to the reservoir. If the actuating force is fully removed from the push rod 188, the valve body 142 will return to the position shown in Figure 1, wherein the control valve is fully opened so that the pressure in the power chamber 100 is fully exhausted to the reservoir. The land 210 and the seal 216 move rightwardly so as to pass beyond the groove edge 222 and close the fluid connection between the annular chamber 158 and the power chamber 100. The power piston return spring 120 will move the power piston 102 rightwardly as the actuating pressure in the power chamber 100 decreases, so returning the piston to the position shown. This movement of the power piston 102 will also permit the pressurizing piston 268 to be returned to the released position shown by the action of its spring 276 as well as by brake actuating pressure in the brake circuit 254. When the cup 270 moves rightwardly so as to uncover the compensation port 32, any pressure remaining in the circuit 254 will be exhausted to reservoir through the compensation port.

In the released position, reservoir (exhaust) pressure, typically atmospheric pressure, exists on both sides of the power piston head 104, and therefore its seal 112 is not sealing against an unbalanced pressure. A full charge of supply pressure is still maintained in the annular chamber 158, and only the seals 216 and 220 are required to seal this pressure. During booster operation, only the seal 220 is sealing full supply pressure, thus minimizing the seal drag due to high pressure on relatively large seal areas.

The tubular conduit 120, in serving the dual function of conducting hydraulic supply pressure to the chamber 158 and also acting as the piston return spring, contributes to the overall reduction in length of the booster assembly, since the point of introduction of supply pressure to the booster at the passage 240 does not have to accommodate the full stroke of the booster piston 102. Instead, this is accommodated by the compression and expansion of the piston return spring as it conducts the supply pressure from that point to the axially movable annular chamber 158.

**Claims**

1. A hydraulic power booster comprising
   a hydraulic fluid reservoir (12);
   a source (228) of hydraulic fluid pressure using hydraulic fluid from the reservoir (12);
   a power piston (102) reciprocably driven in a booster force-applying direction by hydraulic fluid pressure from the pressure source (228) selectively acting on one side of the power piston (102);
   a hydraulic fluid reservoir return (114, 38, 42) continuously provided on the other side of the power piston (102);
   valve means (142) in the power piston (102) controlling the application and release of hydraulic fluid pressure on the said one side of the power piston (102) to actuate and release the booster (20) and to return hydraulic fluid to the booster fluid reservoir (12);
   and a power piston return spring (120) continuously urging the power piston (102) towards the booster release position;
   characterised by:
   the power piston return spring being in the form of a fluid pressure conduit (120) having a connection (128) at one end to the power piston (102) to deliver power hydraulic fluid under pressure from the pressure source (228) to the valve means (142) for providing booster power under the control of the valve means (142), and having a connection (132) at the other end (130) to receive hydraulic fluid under pressure from the source (228) of fluid pressure so that booster actuating pressure is continuously available at the valve means (142) but acts across the power piston (102) only when the valve means (142) is operated to actuate the booster (20).

2. A hydraulic power booster according to claim 1, characterised in that the power piston (102) has a passage (282) therein receiving one end (124) of the tubular conduit (120) in hydraulic fluid pressure-transmitting relation, a conduit retainer (52) providing reaction for the tubular conduit (120) in its role of power piston return spring has a passage therein receiving the other end (130) of the tubular conduit (120) in hydraulic fluid-transmitting relation and adapted to receive a supply of hydraulic fluid under full supply pressure, and the valve means (142) is reciprocably received in the power piston (102) and is adapted, in addition to controlling the application of hydraulic fluid pressure from the tubular conduit (120) to the said one side of the power piston (102) to actuate the booster (20), to controllably release the so-applied hydraulic fluid pressure from the said one side of the power piston (102) to release the booster (20).

3. A hydraulic power booster according to claim 1, in the form of a hydraulic power brake booster, characterised in that the power piston (102) is reciprocably and sealingly received in a bore (44) in a housing (16), the hydraulic fluid reservoir return (114, 38, 42) includes a chamber (114) vented to the booster reservoir (12), the fluid pressure conduit (120) comprises a hollow tube, a retainer (52) is axially fixed in the bore (44) and defines a portion of the vented chamber (114) and provides reaction for the power piston return spring, the said other end (130) of the fluid pressure conduit (120) is sealingly secured to the retainer (52) and is in fluid communication with a first passage in the retainer (52) having full booster operating pressure continously supplied thereto, whereby the fluid pressure conduit (120) is effective to continuously communicate full booster operating pressure to a second passage (282) in the power piston (102), and the valve means (142) in the power piston (102) is effective to control the second passage (282) for modulating the full booster operating pressure into and out of the power chamber (100) to control booster power actuation and release, the valve means (142) including passage means (154, 224, 162) selectively connecting the power chamber (100) to the vented chamber (114) to return fluid from the power chamber (100) to the reservoir (12) upon booster releasing action.

4. A hydraulic power booster according to claim 1, in the form of a hydraulic power brake booster, characterised in that the power piston (102) is reciprocably received in a bore (44) formed in a housing (16), and has a dynamic seal (112) reciprocably sealing between the power piston (102) and the wall (50) of the bore (44), a power chamber (100) in the bore (44) is defined in part by one side (160) of the power piston (102), the valve means (142) is disposed in the housing (16) and is effective to control the supply of hydraulic booster actuating pressure to the power piston (102), a pump (228) constituting the source (228) of hydraulic fluid pressure operatively receives hydraulic fluid from the reservoir (12) and operatively provides hydraulic fluid under pressure to the power chamber (100) under control of the valve means (142), connection means (250, 252) is provided for connecting the booster (20) to operatively pressurize at least one (244) of a plurality of brake circuits (244, 254), an annular conduit retainer (52) is mounted in the bore (44) on the opposite side of the power piston (102) from the power chamber (100) and forms with the bore wall (50) a first annular chamber (66) about the retainer (52), first (60) and second (62) retainer seals are respectively located on axially opposite sides of the first annular chamber (66) and seal between the retainer (52) and the bore wall (50), the power piston (102) has an extension (108) extending axially through the annular conduit retainer (52) and in reciprocable sealing relation therewith to define between the power piston (102) and the annular conduit retainer (52) a reservoir-pressure chamber (150) continuously fluid-connected to the reservoir (12), the power piston extension (108) also providing a booster output member, the power piston (102) has a recess (156) therein defined by a side wall with a control valve (142) reciprocably received therein and forming a part of the control valve means (142), a second annular chamber (158) is formed about the control valve (142) with the side wall of the recess (156), first and second control valve seals (216, 220) are respectively located on axially opposite sides of the second annular chamber (158) and provide reciprocable sealing between the control valve (142) and the recess (156) side wall, the first control valve seal (216) is movable axially into the second annular chamber (158) upon actuating movement of the control valve (142) in the power piston recess (156) to fluidly interconnect the second annular chamber (158) and the power chamber (100), the power piston (102) has a third annular chamber (200) formed by a power piston recess about the control valve (142), with the edge (168) of the third annular chamber (200) nearer the power chamber (100) forming a first valve portion, the control valve (142) has a shoulder (202) thereon positioned in the third annular chamber (200) and having the outer edge (204) thereof forming a second valve portion co-operating with the first valve portion (168) to control hydraulic fluid exhaust from the power chamber (100) upon relative axial movement of the control valve (142) and the power piston (102), a passage (224) in the control valve (142) opens at one end into the reservoir-pressure chamber (150) and also opens into the third annular chamber (200) on the opposite side of the second valve portion (204) from the power chamber (100), the said passage (224) providing an exhaust from the power chamber (100) to the reservoir (12) via the reservoir-pressure chamber (150), the fluid pressure conduit (120) is disposed in the reservoir-pressure chamber (150) and has the said one end thereof sealingly secured to the conduit retainer (52) and continously fluid-connected within the conduit retainer (52) to the first annular chamber (66) and has the said other end (130) sealingly secured to the power piston (102) and continuously fluid-connected within the power piston (102) to the second annular chamber (158), so that no hydraulic pressure differential is exerted across the power piston (102) and particularly across the power piston (102) to the bore wall dynamic seal (112) when the booster is not pressure-actuated, and the conduit retainer (52) provides reaction for the spring action of the fluid pressure conduit (120).

**Patentansprüche**

1. Hydraulischer Leistungsverstärker mit
einem Hydraulikfluid-Vorratsbehälter (12);
einer Hydraulikfluid-Druckquelle (28) unter Benutzung von Hydraulikfluid aus dem Vorratsbehälter (12);
einem Leistungskolben (102), der in einer Kraftübertragungsrichtung des Verstärkers durch wahlweise auf eine Seite des Leistungskolbens (102) einwirkenden Hydraulikfluiddruck von der Druckquelle (228) hin und her angetrieben wird;

einem an der anderen Seite des Leistungskolbens (102) kontinuierlich vorgesehenen Hydraulikfluid-Vorratsbehälter-Rücklauf (114, 38, 42);

das Beaufschlagen und das Lösen von Hydraulikfluiddruck auf die eine bzw. von der einen Seite des Leistungskolbens (102) zur Betätigung und zur Lösung des Verstärkers (20) und zur Rückführung von Hydraulikfluid zu dem Verstärker-Fluidvorratsbehälter (12) steuerndes Ventilmittel (142) in dem Leistungskolben (102);

und einer kontinuierlich den Leistungskolben (102) zu der Verstärker-Löselage drängenden Leistungskolben-Rückholfeder (120);
dadurch gekennzeichnet, daß:

die Leistungskolben-Rückholfeder in Form einer Fluiddruckleitung (120) vorhanden ist, mit einer Verbindung (128) zu dem Leistungskolben (102) an einem Ende, um unter Druck stehendes Leistungshydraulikfluid von der Druckquelle (228) zu dem Ventilmittel (142) zu liefern, um Verstärkerleistung unter Beeinflussung durch das Ventilmittel (142) zu schaffen, und mit einer Verbindung (132) an dem anderen Ende (130) zum Aufnehmen von unter Druck stehendem Hydraulikfluid von der Fluiddruckquelle (228), so daß Verstärkerbetätigungsdruck kontinuierlich an dem Ventilmittel (142) verfügbar, jedoch nur über den Leistungskolben (102) wirksam ist, wenn das Ventilmittel (145) zur Betätigung des Verstärkers (20) betrieben wird.

2. Hydraulischer Leistungsverstärker nach Anspruch 1, dadurch gekennzeichnet, daß der Leistungskolben (102) einen inneren Durchlaß (282) besitzt, der ein Ende (124) der Rohrleitung (120) in Hydraulikfluiddruck-Übertragungsbeziehung aufnimmt, daß ein Reaktion für die Rohrleitung (120) in ihrer Rolle als Leistungskolben-Rückholfeder schaffender Leitungs-Rückhalter (52) einen das andere Ende (130) der Rohrleitung (120) in Hydraulikfluid-Übertragungsbeziehung aufnehmenden inneren Durchlaß besitzt, ausgelegt zur Aufnahme eines Vorrates von Hydraulikfluid unter vollem Versorgungsdruck, und daß das Ventilmittel (142) hin- und herbewegbar in dem Leistungskolben (102) aufgenommen und zusätzlich zur Steuerung der Beaufschlagung der einen Seite des Leistungskolbens (102) mit Hydraulikfluiddruck von der Rohrleitung (120) zur Betätigung des Verstärkers (20) auch ausgelegt ist, steuerbar den so beaufschlagten Hydraulikfluiddruck von der einen Seite des Leistungskolbens (102) zur Lösung des Verstärkers (20) zu lösen.

3. Hydraulischer Leistungsverstärker nach Anspruch 1 in der Form eines hydraulischen Leistungs-Bremsverstärkers, dadurch gekennzeichnet, daß der Leistungskolben (102) hin- und herbewegbar und dichtend in einer Bohrung (44) in einem Gehäuse (16) aufgenommen ist, daß der Hydraulikfluid-Vorratsbehälter-Rücklauf (114, 38, 42) eine zu dem Verstärker-Vorratsbehälter (12) ventilierte Kammer (114) enthält, daß die Fluiddruckleitung (120) ein Hohlrohr umfaßt, daß ein Rückhalter (52) axial in der Bohrung (44) festgelegt ist, einen Abschnitt der ventilierten Kammer (114) bestimmt und Reaktion für die Leistungskolben-Rückholfeder schafft, daß das andere Ende (130) der Fluiddrukkleitung (120) dichtend an dem Rückhalter (52) gesichert und in Fluidverbindung mit einem ersten Durchlaß im Rückhalter (52) ist, dem der volle Verstärkerbetriebsdruck kontinuierlich zugeführt ist, wodurch die Fluiddruckleitung (120) zur kontinuierlichen Übertragung von vollem Verstärkerbetriebsdruck zu einem zweiten Durchlaß (282) in dem Leistungskolben (102) wirksam ist, und daß das Ventilmittel (142) in dem Leistungskolben (102) zum Steuern des zweiten Durchlasses (282) wirksam ist zum Modulieren des vollen Verstärkerbetriebsdrucks in die Leistungskammer (100) hinein und aus ihr heraus, um die Verstärkerleistungsbeaufschlagung und -lösung zu steuern, daß das Ventilmittel (122) Durchlaßmittel (154, 224, 162) enthält, die wahlweise die Leistungskammer (100) mit der ventilierten Kammer (114) verbinden, um Fluid von der Leistungskammer (100) zu dem Vorratsbehälter (12) auf eine Leistungsverstärker-Lösebetätigung hin zurückzuführen.

4. Hydraulischer Leistungsverstärker nach Anspruch 1 in der Form eines hydraulischen Bremsleistungsverstärkers, dadurch gekennzeichnet, daß der Leistungskolben (102) hin- und herbewegbar in einer in einem Gehäuse (16) ausgebildeten Bohrung (44) aufgenommen ist und eine hin- und herbewegbar eine Abdichtung zwischen dem Leistungskolben (102) und der Wand (50) der Bohrung (44) bewirkende dynamische Dichtung (112) besitzt, daß eine Leistungskammer (100) in der Bohrung (44) teilweise durch eine Seite (160) des Leistungskolbens (102) bestimmt ist, daß das Ventilmittel (142) in dem Gehäuse (16) angeordnet und wirksam ist, die Zufuhr von Hydraulik-Verstärkerbetätigungsdruck zu dem Leistungskolben (102) zu steuern, daß eine die Hydraulikfluid-Druckquelle (228) bildende Pumpe (228) wirksam Hydraulikfluid vom Vorratsbehälter (12) aufnimmt und wirksam unter Druck stehendes Hydraulikfluid der Leistungskammer (100) unter Beeinflussung durch das Ventilmittel (142) zuführt, daß Anschlußmittel (250, 252) vorgesehen sind zum Anschließen des Leistungsverstärkers (20), um mindestens einen (244) einer Vielzahl von Bremskreisen (244, 254) wirksam unter Druck zu setzen, daß ein ringförmiger Rohrleitungs-Rückhalter (52) in der Bohrung (44) an der der Leistungskammer (100) entgegengesetzten Seite des Leistungskolbens (102) in der Bohrung (44) angebracht ist und mit der Bohrungswand (50) eine erste Ringkammer (66) um den Rückhalter (52) bildet, daß erste (60) und zweite (62) Rückhalter-Dichtungen jeweils an axial einander entgegengesetzt liegenden Seiten der ersten Ringkammer (66) angeordnet sind und zwischen dem Rückhalter (52) und der Bohrungswand (50) abdichten, daß der Leistungskolben (102) einen sich axial durch den ringförmigen Leitungsrückhalter (52) erstreckenden Fortsatz (108) in hin- und herbewegbarer Dichtbeziehung mit diesem besitzt, um zwischen dem Leistungskolben (102) und dem ringförmigen Leitungsrückhalter (52) eine in kontinuierlicher Fluidverbindung mit dem Vorratsbehälter (12) stehende Vorratsbehälter-Druckkammer (150) zu bestimmen, daß der Leistungskolben-Fortsatz (108) auch ein Verstärker-Abgabeglied schafft, daß der Leistungskolben (102) einen Einschnitt (156) in sich besitzt, der durch eine Seitenwand bestimmt ist, mit darin hin- und herbewegbar aufgenommenem Steuerventil (142), das einen Teil des Steuerventilmittels (142) bildet, daß eine zweite Ringkammer (158) um das Steuerventil (142) mit der Seitenwand des Einschnittes (156) gebildet ist, daß erste und zweite Steuerventildichtungen (216, 220) jeweils an axial einander gegenüberliegenden Seiten der zweiten Ringkammer (158) angeordnet sind und hin- und herbewegbare Abdichtung zwischen dem Steuerventil (152) und der Seitenwand des Einschnittes (156) schaffen, daß die erste Steuerventildichtung (216) axial in die zweite Ringkammer (158) hinein auf eine Betätigungsbewegung des Steuerventils (142) in der Vertiefung (156) des Leistungskolbens bewegbar ist zur Fluidverbindung der zweiten Ringkammer (158) mit der Leistungskammer (100), daß der Leistungskolben (102) eine durch eine Leistungskolbenvertiefung um das Steuerventil (142) gebildete dritte Ringkammer (200) besitzt, wobei die der Leistungskammer (100) näher gelegene Kante (168) der dritten Ringkammer (200) einen ersten Ventilabschnitt bildet, daß das Steuerventil (142) an sich eine in der dritten Ringkammer (200) angeordnete Schulter (202) besitzt, deren Außenkante (204) einen zweiten mit dem ersten Ventilabschnitt (168) zum Steuern von Hydraulikfluidaustritt aus der Leistungskammer (100) auf eine relative Axialbewegung des Steuerventils hin (142) zusammenwirkenden zweiten Ventilabschnitt bildet, daß ein Durchlaß (224) in dem Steuerventil (142) an einem Ende in die Vorratsbehälter-Druckkammer (150) mündet und auch in die dritte Ringkammer (200) an der der Leistungskammer (100) gegenüberliegenden Seite des zweiten Ventilabschnitts (204) mündet, daß der Durchlaß (224) einen Abgang von der Leistungskammer (100) zu dem Vorratsbehälter (12) über die Vorratsbehälterdruckkammer (150) schafft, daß die Fluiddruckleitung (120) in der Vorratsbehälter-Druckkammer (150) angeordnet ist und das eine Ende derselben dichtend an dem Leitungsrückhalter (52) und in kontinuierlicher Fluidverbindung mit der ersten Ringkammer (66) in dem Leitungsrückhalter (52) hat und das andere Ende (130) dichtend an dem Leistungskolben (102) gesichert und in kontinuierlicher Fluidverbindung innerhalb des Leistungskolbens (102) mit der zweiten Ringkammer (158) hat, so daß kein hydraulischer Druckunterschied über dem Leistungskolben (102) und insbesondere über dem Leistungskolben (102) zu der dynamischen Abdichtung (112) der Bohrungswand ausgeübt wird, wenn der Leistungsverstärker nicht druckbetätigt ist und der Leitungsrückhalter (52) Reaktion für die Federwirkung der Fluiddruckleitung (120) schafft.

## Revendications

1. Amplificateur d'assistance hydraulique, comprenant:

un réservoir de fluide hydraulique (12);

une source (228) de pression de fluide hydraulique utilisant le fluide hydraulique provenant du réservoir (12);

un piston d'assistance (102) qui est entraîné en translation alternative dans le sens de l'application de la force de l'amplificateur par une pression de fluide hydraulique fournie par une source de pression (228) qui agit sélectivement sur une première face du piston d'assistance (102);

un retour (114, 38, 42) vers le réservoir de fluide hydraulique qui est continuellement établi sur l'autre face du piston d'assistance (102);

des moyens du type valve (142) logés dans le piston d'assistance (102) et qui commandent l'application et le relâchement de la pression du fluide hydraulique sur ladite première face du piston d'assistance (102) pour actionner et relâcher l'amplificateur (20) et renvoyer le fluide hydraulique au réservoir (12) de fluide de l'amplificateur; et

un ressort de rappel (120) du piston d'assistance qui tend continuellement à repousser le piston d'assistance (102) vers la position de relâchement de l'amplificateur;

caractérisé en ce que:

le ressort de rappel du piston d'assistance revêt la forme d'un conduit de pression de fluide (120) qui présente à une extrémité un raccordement sur le piston d'assistance (102), pour transmettre le fluide hydraulique d'assistance sous pression de la source de pression (228) aux moyens du type valve (142) afin de fournir l'assistance d'amplificateur sous la commande des moyens du type valve (142), et, à son autre extrémité (130), un raccordement (132) pour recevoir le fluide hydraulique sous pression en provenance de la source (228) de pression de fluide, de manière que la pression d'actionnement de l'amplificateur soit continuellement disponible au niveau des moyens du type valve (412) mais agisse sur le piston d'assistance (102) uniquement lorsque les moyens du type valve (142) sont manoeuvrés pour actionner l'amplificateur (20).

2. Amplificateur d'assistance hydraulique selon la revendication 1, caractérisé en ce que le piston d'assistance (102) présente intérieurement un passage (282) qui reçoit une extrémité (124) du conduit tubulaire (120), dans une position relative de transmission de la pression du fluide hydraulique, un organe (52) de retenue du conduit, qui forme l'élément de réaction pour le conduit tubulaire (120) dans son rôle de ressort de rappel du piston d'assistance, présente intérieurement un passage qui reçoit l'autre extrémité (130) du conduit tubulaire (120) dans une position relative de transmission du fluide hydraulique et est adapté pour recevoir une alimentation de fluide hydraulique sous la pleine pression d'alimentation, et les moyens du type valve (142) sont logés mobiles en translation alternative dans le piston d'assistance (102) et sont adaptés pour, non seulement commander l'application de la pression de fluide hydraulique du conduit tubulaire (120) à ladite première face du piston d'assistance (102) pour actionner l'amplificateur (20), mais aussi pour relâcher de façon commandée la pression de fluide hydraulique ainsi appliquée de ladite première face du piston d'assistance (102) pour relâcher l'amplificateur (20).

3. Amplificateur d'assistance hydraulique selon la revendication 1, constituant un amplificateur de freinage à assistance hydraulique, caractérisé en ce que le piston d'assistance (102) est logé mobile en translation alternative et à joint étanche dans un alésage (44) formé dans un corps (16), le retour (114, 38, 42) vers le réservoir de fluide hydraulique comprend une chambre (114) mise à la bâche sur le réservoir (12) de l'amplificateur, le conduit (120) de pression de fluide comprend un tube creux, un organe de retenue (52) est fixé axialement dans l'alésage (44) et définit une portion de la chambre (114) mise à la bâche, et forme un élément de réaction pour le ressort de rappel du piston d'assistance, ladite autre extrémité (130) du conduit de pression de fluide (120) est fixée à joint étanche sur l'organe de retenue (52) et est en communication pour la circulation du fluide avec un premier passage ménagé dans l'organe de retenue (52) auquel la pleine pression d'actionnement de l'amplificateur est continuellement transmise, de sorte que le conduit de pression de fluide (120) est capable de transmettre continuellement la pleine pression d'actionnement de l'amplificateur à un deuxième passage (282) formé dans le piston d'assistance (102), et les moyens du type valve (142) prévus dans le piston d'assistance (102) sont capables de commander le deuxième passage (282) pour moduler la pleine pression d'actionnement de l'amplificateur à l'entrée et à la sortie de la chambre d'assistance (100) pour commander l'actionnement et le relâchement de l'assistance de l'amplificateur, les moyens du type valve (142) comprenant des moyens formant passage (154, 224, 162) qui relient sélectivement la chambre d'assistance (100) à la chambre (114) mise à la bâche pour renvoyer le fluide de la chambre d'assistance (100) au réservoir (12) au moment de l'action de relâchement de l'amplificateur.

4. Amplificateur d'assistance hydraulique selon la revendication 1, constituant un amplificateur de freinage à assistance hydraulique, caractérisé en ce que le piston d'assistance (102) est monté mobile en, translation alternative dans l'alésage (44) formé dans un corps (16), et porte une garniture d'étanchéité de joint dynamique (112) qui établit un joint étanche à coulissement alternatif entre le piston d'assistance (102) et la paroi (50) de l'alésage (44), une chambre d'assistance (100) ménagée dans l'alésage (44) et définie en partie par une première face (160) du piston d'assistance (102), les moyens du type valve (142) sont disposés dans le corps (16) et sont capables de commander la transmission de la pression d'actionnement de l'amplificateur hydraulique au piston d'assistance (102), une pompe (228) qui constitue la source (228) de pression de fluide hydraulique reçoit fonctionnellement le fluide hydraulique provenant du réservoir (12) et transmet fonctionnellement un fluide hydraulique sous pression à la chambre d'assistance (100) sous la commande des moyens du type valve (142), des moyens de raccordement (250, 252) sont prévus pour raccorder l'amplificateur (20) pour mettre fonctionnellement sous pression au moins l'un (244) d'une pluralité de circuit de freinage (244, 254), un organe annulaire de retenue de conduit (52) est monté dans l'alésage (44) sur le côté du piston d'assistance (102) qui est à l'opposé de la chambre d'assistance (100) et forme avec la paroi (50) de l'alésage une première chambre annulaire (66) formée autour de l'organe de retenue (52), une première (60) et une deuxième (62) garnitures d'étanchéité d'organe de retenue sont respectivement placées sur des côtés axialement opposés de la première chambre annulaire (66) et forme un joint étanche entre l'organe de retenue (52) et la paroi (50) de l'alésage, le piston d'assistance (102) possède un prolongement (108) qui s'étend axialement à travers l'organe annulaire (52) de retenue du conduit et est en relation de joint étanche à coulissement alternatif avec cet organe pour définir entre le piston d'assistance (102) et l'organe annulaire (52) de retenue du conduit, une chambre de pression de réservoir (150) qui est continuellement en communication avec le réservoir (12) pour la circulation du fluide, le prolongement (108) du piston d'assistance formant également un élément de sortie de l'amplificateur, le piston d'assistance (102) présente intérieurement une cavité (156) définie par une paroi latérale, avec une valve de commande (142) logée mobile en translation alternative dans cette cavité, et qui fait partie des moyens du type valve de commande (142), une deuxième chambre annulaire (158) est formée autour de la valve de commande (142), avec la paroi latérale de la cavité (156), une première et une deuxième garnitures d'étanchéité (216, 220) de la valve de commande sont placées respectivement sur des côtés axialement opposés de la deuxième chambre annulaire (158) et établissent un joint étanche à coulissement alternatif entre la valve de commande (142) et la paroi latérale de la cavité (156), la première garniture d'étanchéité (216) de la valve de commande peut se déplacer axialement pour pénétrer dans la deuxième chambre annulaire (158) en réponse au mouvement d'actionnement de la valve de commande (142) dans la cavité (156) du piston d'assistance, pour relier la deuxième chambre annulaire (158) à la chambre d'assistance (100) pour la circulation du fluide, le piston d'assistance (102) présente une troisième chambre annulaire (200) formée par une cavité du piston d'assistance existant autour de la valve de commande (142), l'arête (168) de la troisième chambre annulaire (200) qui est la plus proche de la chambre d'assistance (100) formant une première portion de valve, la valve de commande (142) possède un épaulement (202) positionné dans la troisième chambre annulaire (200) et l'arête extérieure (204) de cet épaulement forme une deuxième portion de valve qui coopère avec la première portion de valve (168) pour commander la mise à la bâche du fluide hydraulique de la chambre d'assistance (100) en réponse à un déplacement axial relatif de la valve de commande (142) et du piston d'assistance (102), un passage (224) formé dans la valve de commande (142) débouche à une première extrémité dans la chambre (150) qui est à la pression du réservoir, et s'ouvre aussi dans la troisième chambre annulaire (200), sur le côté de la deuxième portion de valve (204) qui est à l'opposé de la chambre d'assistance (100), ledit passage (224) formant une mise à la bâche de la chambre d'assistance (100) vers le réservoir (12) en passant par la chambre (150) qui est à la pression du réservoir, le conduit de pression de fluide (120) est disposé dans la chambre (150) qui est à la pression du réservoir et ladite première extrémité de ce conduit est fixée à joint étanche à l'organe (52) de retenue du conduit et est reliée continuellement pour la circulation du fluide à la première chambre annulaire (66) tandis que ladite autre extrémité (130) est fixée à joint étanche au piston d'assistance (102), et qu'à l'intérieur du piston d'assistance (102) elle est raccordée continuellement pour la circulation du fluide, à la deuxième chambre annulaire (158), de sorte qu'il ne s'exerce pas de différence de pression hydraulique de part et d'autre du piston d'assistance (102) et, en particulier de part et d'autre de la garniture d'étanchéité (112) établissant un joint dynamique entre le piston d'assistance (102) et la paroi de l'alésage lorsque l'amplificateur n'est pas actionné par une pression, et l'organe (52) de retenue du conduit forme un élément de réaction pour l'action de ressort du conduit (120) de pression de fluide.

EP 0 200 387 B1

Fig.1

PUMP

ACCUMULATOR

Fig.2

Fig.3